Europäisches Patentamt

(19) European Patent Office

Office européen des brevets

(11) Numéro de publication : **0 126 686**
**B1**

(12) **FASCICULE DE BREVET EUROPÉEN**

(45) Date de publication du fascicule du brevet :
**17.08.88**

(21) Numéro de dépôt : **84400985.2**

(22) Date de dépôt : **15.05.84**

(51) Int. Cl.⁴ : **G 02 B  6/12**, G 02 B  6/28,
     G 02 F  1/21, G 02 F  1/29

(54) **Structure de guidage optique utilisant un réseau de diffraction.**

(30) Priorité : **19.05.83 FR 8308298**

(43) Date de publication de la demande :
**28.11.84 Bulletin 84/48**

(45) Mention de la délivrance du brevet :
**17.08.88 Bulletin 88/33**

(84) Etats contractants désignés :
**DE GB NL SE**

(56) Documents cités :
**FR-A- 2 304 935**
**FR-A- 2 454 633**
**US-A- 3 814 498**
**US-A- 4 148 556**
**PATENTS ABSTRACTS OF JAPAN, vol. 3, no. 78 (E-121), 5 juillet 1979, page 73 E 121; & JP - A - 54 56463 (NIPPON DENSHIN DENWA KOSHA) 07-05-1979**

(73) Titulaire : **Yi-Yan, Alfredo**
**19, rue de la Tombe Issoire**
**F-75014 Paris (FR)**

(72) Inventeur : **Yi-Yan, Alfredo**
**19, rue de la Tombe Issoire**
**F-75014 Paris (FR)**

(74) Mandataire : **Mongrédien, André et al**
**c/o BREVATOME 25, rue de Ponthieu**
**F-75008 Paris (FR)**

## Description

La présente invention a pour objet une structure de guidage optique. Elle trouve une application en optique intégrée.

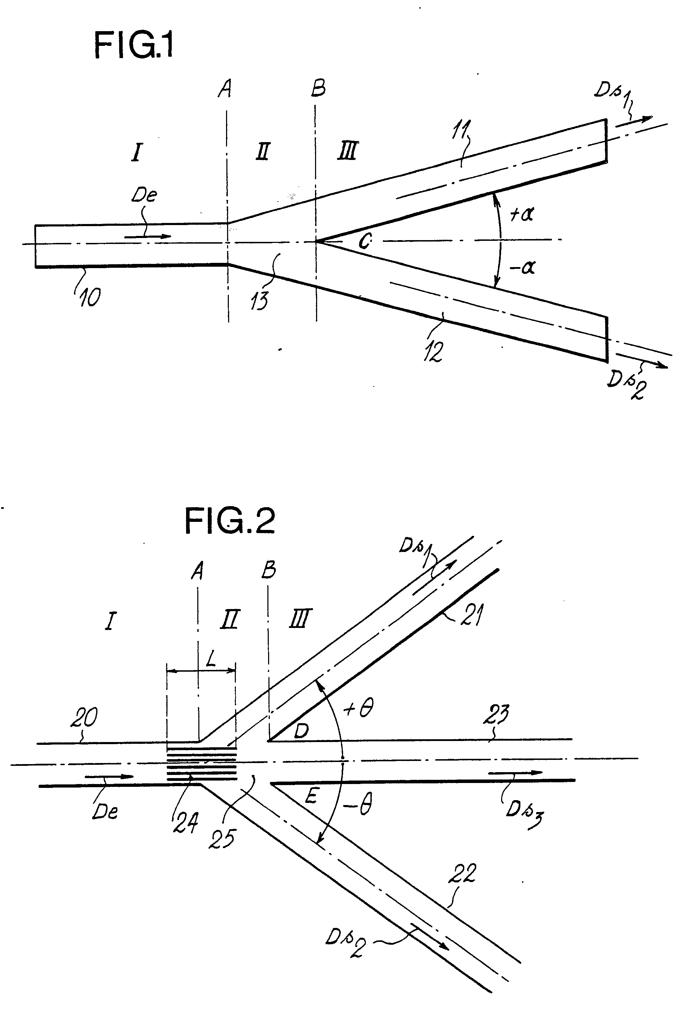

La structure de l'invention s'apparente à un dispositif dit à « jonction Y » qui est représenté schématiquement sur la figure 1. Un tel dispositif comprend un guide d'onde optique d'entrée 10, de direction De, prolongé par deux guides de sortie 11 et 12, de directions $Ds_1$, $Ds_2$ inclinées respectivement de $+\alpha$ et $-\alpha$ par rapport à la direction De du guide d'entrée. La structure comprend encore une zone 13 évasée formant la jonction entre le guide d'entrée et les guides de sortie. Un faisceau optique pénétrant dans la jonction par le guide d'entrée se divise en deux faisceaux qui se propagent dans les deux guides de sortie.

Pour pouvoir mieux préciser les phénomènes rencontrés dans une telle structure, on considérera, par la suite, deux plans A et B perpendiculaires à la direction De, ces plans délimitant une zone I à gauche de A, qui est celle du guide d'entrée, une zone II, entre A et B, qui est celle de la jonction proprement dite, et une zone III, à droite de B, qui est celle des guides de sortie. Par ailleurs, on notera C l'arête où se rejoignent les deux guides de sortie.

Une telle jonction trouve de nombreuses applications en optique intégrée, notamment dans la réalisation de modulateurs dits de Mach-Zehnder.

Les propriétés de ces dispositifs sont décrites, par exemple, dans l'article de ANDERSON I. intitulé « Transmission performance of Y-junctions in planar dielectric waveguides », publié dans la revue « IEE Proceedings on Microwaves Optics and Acoustics », 2, 1 pages 7-12 de janvier 1978, ainsi que dans l'article de BAETS R. et LAGASSE P.E., intitulé « Calculation of Radiation Loss in Integrated Optics Tapers and Y-junctions » publié dans la revue Applied Optics 21, 11, pages 1972-1978 de Juin 1982.

Ce genre de dispositif soulève trois types de difficultés qu'il faut bien comprendre pour saisir l'intérêt de l'invention qui va être décrite. Il s'agit :

a) de la conversion de mode dans la région de la jonction (région II),

b) de l'apparition d'un rayonnement dans l'angle de la jonction (zone C),

c) du couplage entre les deux guides de sortie (région III).

En ce qui concerne la conversion de mode, le phénomène est le suivant. Le guide d'entrée 10 et les guides de sortie 11 et 12 sont conçus pour fonctionner en monomode. Cela signifie que, pour la longueur d'onde de fonctionnement utilisée, la largeur et l'épaisseur des guides sont telles que seul le mode de propagation fondamental peut s'établir. A épaisseur donnée, la tolérance sur la largeur du guide est très faible et si cette largeur est excessive, des modes d'ordre supérieur vont pouvoir se propager. C'est précisément ce qui se passe dans la zone II du dispositif où la jonction 13 présente une forme évasée dont la largeur croît constamment entre le plan A et le plan B. La condition de maintien du mode le plus bas n'est donc plus respectée dans cette zone et des modes d'ordre supérieur peuvent apparaître. Un autre phénomène se combine au précédent pour amplifier cette conversion de mode : c'est la diffraction de la lumière dans le plan A. En effet, dans ce plan, le guide présente une discontinuité. Le vecteur de propagation dirigé selon De dans la zone I, va présenter, dans le plan A, une dispersion angulaire de sorte que, après A, le vecteur de propagation ne sera plus dirigé selon De dans la totalité du plan de section droite. Sur les bords, ce vecteur sera dirigé obliquement.

Ces deux phénomènes se conjuguent pour rompre le caractère monomode de la structure et provoquer la conversion de mode. Comme les guides de sortie 11 et 12 sont, par construction, monomodes il y aura incompatibilité entre le front de l'onde multimode qui atteint ces guides dans le plan B et le front de l'onde monomode apte à se propager dans les deux guides de sortie. Une partie de l'énergie lumineuse d'entrée se trouvera alors dispersée dans la région du plan B.

La seconde difficulté rencontrée dans les jonctions de ce genre est l'apparition d'un rayonnement dans l'angle C. Le front quasi sphérique de l'onde qui se propage du plan A vers le plan B, dans la région II, heurte l'arête C où se forme une onde de diffraction ayant pour centre ladite arête. Cette onde rayonne dans tout le dispositif, y compris vers le guide d'entrée. Seule une faible partie de cette onde diffractée satisfait aux conditions permettant sa propagation dans les guides de sortie ; le reste est diffusé et perdu.

La dernière difficulté concerne la proximité des guides de sortie dans la région III. Cette proximité a pour effet de coupler les guides l'un à l'autre, ce qui entraîne (comme dans un coupleur directif où cet effet est utilisé) le transfert de l'énergie d'un guide à l'autre. Ce transfert présente une quasi-périodicité lorsqu'on s'éloigne du plan B. Cet effet est d'autant plus marqué que la valeur de l'ouverture angulaire ($2\alpha$) est plus faible. Or, dans les jonctions Y, cet angle est nécessairement faible (inférieur à quelques degrés) si l'on veut obtenir un bon transfert d'énergie du guide d'entrée vers les guides de sortie. Ce couplage est donc important.

On connaît par ailleurs des dispositifs en forme de jonction Y qui utilisent un réseau de diffraction permettant de défléchir la lumière dans l'une ou l'autre des branches du Y. C'est ainsi que le document FR-2 304 935 décrit un déflecteur optique qui comprend un guide d'onde prolongé par une partie évasée sur laquelle un transducteur électromécanique formé d'une couche de matériau piézoélectrique et d'électrodes interdigitées. Les guides d'onde d'entrée ont une dimension de l'ordre du micromètre et la zone après évasement une largeur de quelques millimètres.

Dans une telle structure, les problèmes évoqués plus haut ne sont pas résolus, bien au contraire et le phénomène de conversion de mode prend une importance considérable.

Le but de l'invention est justement de surmonter toutes ces difficultés.

A cette fin, l'invention a pour objet une structure de guidage optique comprenant un guide d'entrée monomode ayant une certaine direction, deux guides de sortie monomode ayant des directions inclinées de manière symétrique par rapport à la direction du guide d'entrée, une zone évasée de jonction entre le guide d'entrée et les guides de sortie, et un réseau de diffraction ayant des traits parallèles au guide d'entrée, cette structure étant caractérisée en ce que les traits du réseau de diffraction s'étendent en partie dans le guide d'entrée et en partie dans la zone évasée, ce réseau ayant un pas de l'ordre du micromètre qui définit seulement deux directions de diffraction d'ordres différents de zéro, respectivement + 1 et — 1, ce pas étant choisi pour que ces deux directions de diffraction coïncident avec les directions des deux premiers guides de sortie, ce réseau ayant par ailleurs une faible résolution en longueur d'onde par un nombre de traits inférieur à une dizaine.

Selon une variante privilégiée, la structure comprend un troisième guide de sortie monomode, situé entre les deux premiers et ayant même direction que celle du guide d'entrée, ce troisième guide correspondant à l'ordre 0 de diffraction.

Les caractéristiques de l'invention apparaîtront mieux après la description qui suit, d'un exemple de réalisation donné à titre explicatif et nullement limitatif. Cette description se réfère à des dessins annexés sur lesquels :

la figure 1, déjà décrite, représente une jonction Y selon l'art antérieur,

la figure 2 illustre un exemple de réalisation d'une structure de guidage conforme à l'invention,

la figure 3 représente la répartition énergétique dans les modes d'ordre 0 et 1,

la figure 4 représente schématiquement une coupe de la structure utilisant un réseau d'indice,

la figure 5 représente schématiquement une coupe de la structure utilisant un réseau à ondulation,

la figure 6 représente une variante dans laquelle on effectue une modulation électrooptique,

la figure 7 illustre les différentes étapes d'un procédé de fabrication d'un motif permettant la réalisation d'un réseau,

la figure 8 illustre le mécanisme de diffusion (a) et le profil de diffusion obtenu (b),

la figure 9 illustre le mécanisme d'échange ionique (a) et le profil obtenu (b),

la figure 10 montre les différentes étapes d'un procédé d'obtention d'un guide à réseau par interférométrie.

Telle que représentée sur la figure 2, la structure de l'invention comprend un guide d'entrée monomode 20, de direction De, deux guides de sortie monomodes symétriques 21 et 22, de directions $Ds_1$ et $Ds_2$ inclinées de + θ et — θ par rapport à la direction De, et un troisième guide de sortie 23, situé dans le prolongement du guide d'entrée, c'est-à-dire ayant une direction $Ds_3$ confondue avec la direction De. La jonction entre le guide d'entrée et les guides de sortie s'effectue par une zone évasée 25. La structure comprend encore un réseau de diffraction 24, situé à l'extrémité du guide 20 et à l'entrée de la jonction 25. Ce réseau possède un pas p.

On sait, de manière générale, que lorsqu'un réseau de pas p est traversé par un rayonnement optique de longueur d'onde λ, il apparaît des faisceaux diffractés de divers ordres m (m entier positif ou négatif) dans des directions φ définies par :

$$\sin \varphi = m\lambda/np$$

n étant l'indice de réfraction du matériau.

Dans le cas de l'invention, on utilise un réseau pour lequel seuls les ordres + 1 et — 1 existent, à l'exclusion des ordres supérieurs à 1. Cette condition est réalisée en rendant la quantité λ/np au moins égale à 0,5. En effet, pour une telle valeur, tout ordre m supérieur à 1 conduira à une quantité mλ/np supérieure à 1, pour laquelle il n'existe pas de valeur réelle de l'angle φ.

Pour une longueur d'onde donnée, on choisira donc un pas p inférieur à 2λ/n ; pour λ = 1,55 μm et n = 3.3 par exemple, le pas sera de l'ordre du micron.

Les directions des faisceaux d'ordre + 1 et — 1 font alors des angles + φ et — φ avec la normale, l'angle φ étant défini par :

$$\sin \varphi = \lambda/np$$

L'angle θ des directions $Ds_1$ et $Ds_2$ avec la direction De et le pas p du réseau sont alors choisis pour que φ soit égal à θ. Quant au faisceau d'ordre 0, sa direction est celle du faisceau incident.

En d'autres termes, un faisceau incident empruntant le guide d'entrée 20 donne naissance, après traversée du réseau 24, à trois faisceaux et à trois seulement : un faisceau d'ordre + 1 empruntant le guide 21, un faisceau d'ordre — 1 empruntant le guide 22, et un faisceau d'ordre 0 empruntant le guide 23.

En ce qui concerne la répartition énergétique dans les différents guides de sortie, on observera que, de manière classique, l'énergie diffractée par un réseau dans les ordres ± 1 est proportionnelle à $J_1^2$ (x) où $J_1$ est la fonction de Bessel d'ordre 1 et où x est un paramètre fonction de la longueur L du réseau. Pour un réseau d'indice, où l'indice varie périodiquement d'une quantité Δn, le paramètre x est égal à $\pi\Delta nL/\lambda$. L'énergie correspondant à l'ordre 0 est, elle, proportionnelle à $J_0^2$ (x) où $J_0$ est la fonction de Bessel d'ordre 0.

Selon les valeurs que l'on donne à la longueur L du réseau, donc au paramètre x, on peut répartir la proportion d'énergie dans les guides dans certaines limites.

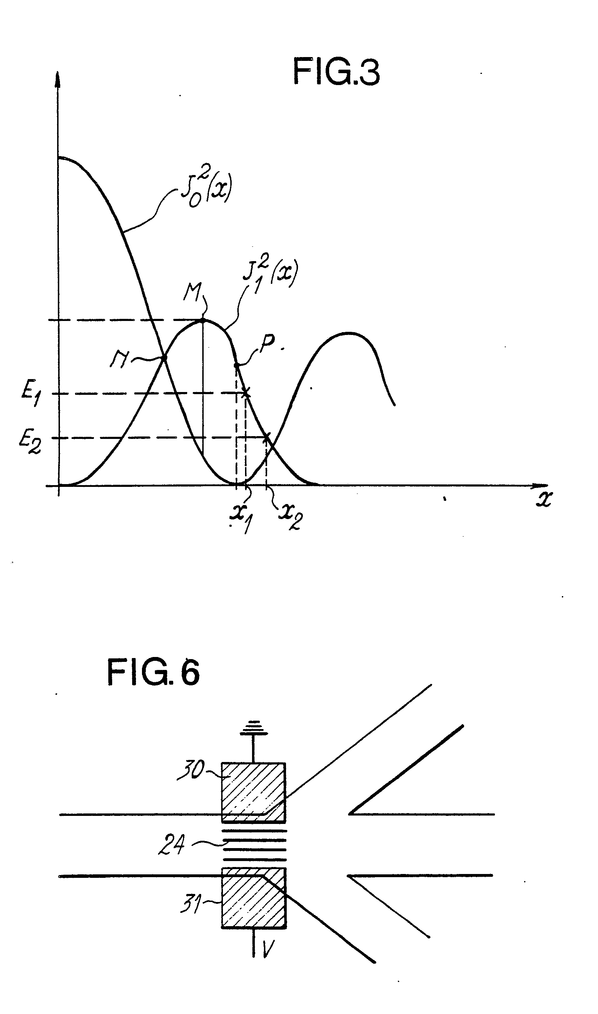

Cette question peut être précisée à l'aide de la figure 3 où sont tracées schématiquement les deux courbes $J_0^2(x)$ et $J_1^2(x)$. Le point de fonctionnement M correspond à un maximum d'énergie dans les ordres ± 1, l'énergie dans le mode 0 n'étant toutefois pas nulle. Le point N correspond à une égalité d'énergie dans les trois modes. Le point P, pour lequel $J_0^2(x) = 0$, correspond à l'absence d'énergie dans l'ordre 0, auquel cas on peut se passer du troisième guide 23, l'énergie diffractée étant uniquement concentrée dans les deux guides 21 et 22. Mais en général, on utilisera ce troisième guide, qui peut servir à des fins diverses, par exemple à une détection, à une contre réaction, etc.

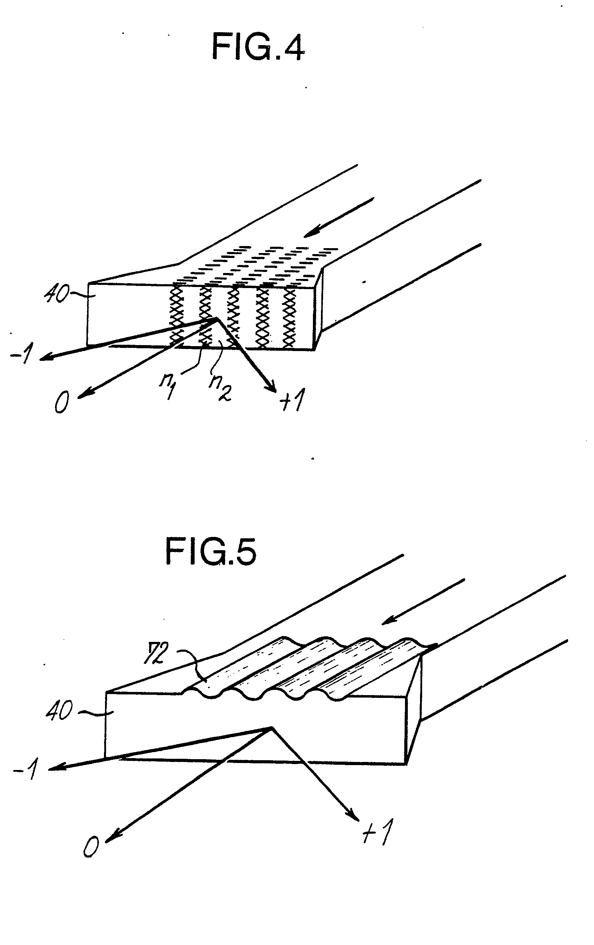

Les figures 4 et 5 montrent schématiquement la disposition du réseau dans le cas d'un réseau d'indice (figure 4) et dans celui d'un réseau par ondulation, dit encore par corrugation (figure 5).

Le réseau d'indice (figure 4) est formé de tranches d'indices $n_1$ et $n_2$ qui alternent périodiquement. Les variations d'indice peuvent être obtenues par diffusion comme on le verra plus loin.

Le réseau à ondulation (figure 5) comprend une structure ondulée 72 qui a pour effet de faire varier périodiquement l'épaisseur effective du guide optique 40. On sait que l'épaisseur effective d'un guide d'onde est égale à la somme de trois termes : l'épaisseur géométrique du guide, la profondeur à laquelle, dans le substrat, l'amplitude de l'onde guidée tombe à l/e de sa valeur et la distance à laquelle, dans le superstrat, l'amplitude de l'onde guidée tombe à l/e de sa valeur. Avec une structure telle que celle de la figure 5, où l'épaisseur du guide optique varie périodiquement, l'épaisseur effective du guide varie donc elle aussi périodiquement. Cette périodicité dans les conditions de propagation crée le réseau de diffraction.

Dans un réseau à ondulation, l'effet de celle-ci est limité à la zone du guide située à proximité de la surface corruguée et ne s'étend pas à la totalité du guide. Dans un réseau d'indice (figure 4) les zones d'indices différents peuvent affecter la totalité du guide. Il en résulte que l'efficacité d'un réseau corrugué est en général plus faible que celle d'un réseau d'indice. On compensera cette faiblesse en donnant au réseau une longueur plus grande.

Les avantages de l'invention sont clairs. Grâce à la présence du réseau de diffraction, le vecteur d'onde du rayonnement incident, vecteur qui dicte la propagation de l'onde, se trouve modifié en vecteurs d'onde adaptés aux directions des guides de sortie. L'optimisation du transfert d'énergie est ainsi obtenue, ce qui n'était pas le cas dans l'art antérieur. De ce fait, les pertes par diffraction dans les coins D et E sont réduites.

En ce qui concerne le phénomène de conversion de mode, on peut observer ceci. Le réseau utilisé a une faible résolution en longueur d'onde, parce qu'il comprend un faible nombre de « traits ». En effet, comme il a été exposé plus haut, le pas du réseau est de l'ordre du micromètre, alors que la largeur du guide d'onde est de l'ordre de 8 à 10 μm. Le réseau ne comprend donc pas plus d'une dizaine de traits. La faible résolution qui en découle entraîne que l'énergie d'un mode d'ordre élevé, tel qu'il résulte du phénomène de conversion évoqué plus haut, sera diffractée vers les deux guides 21 et 22 avec un très faible écart angulaire par rapport au mode fondamental. De cette manière, les pertes dues à la conversion de mode se trouvent réduites par rapport à l'art antérieur.

En outre il est toujours possible de changer la forme du réseau pour améliorer la distribution de l'énergie. On peut par exemple donner aux différentes zones du réseau des longueurs différentes, par exemple courte sur les bords du guide et grande au centre.

Enfin, l'ouverture angulaire $2\theta$ peut être grande (par exemple plusieurs dizaines de degrés), ce qui réduit considérablement les phénomènes de couplage entre guides de sortie. Les inconvénients évoqués plus haut sont donc bien évités.

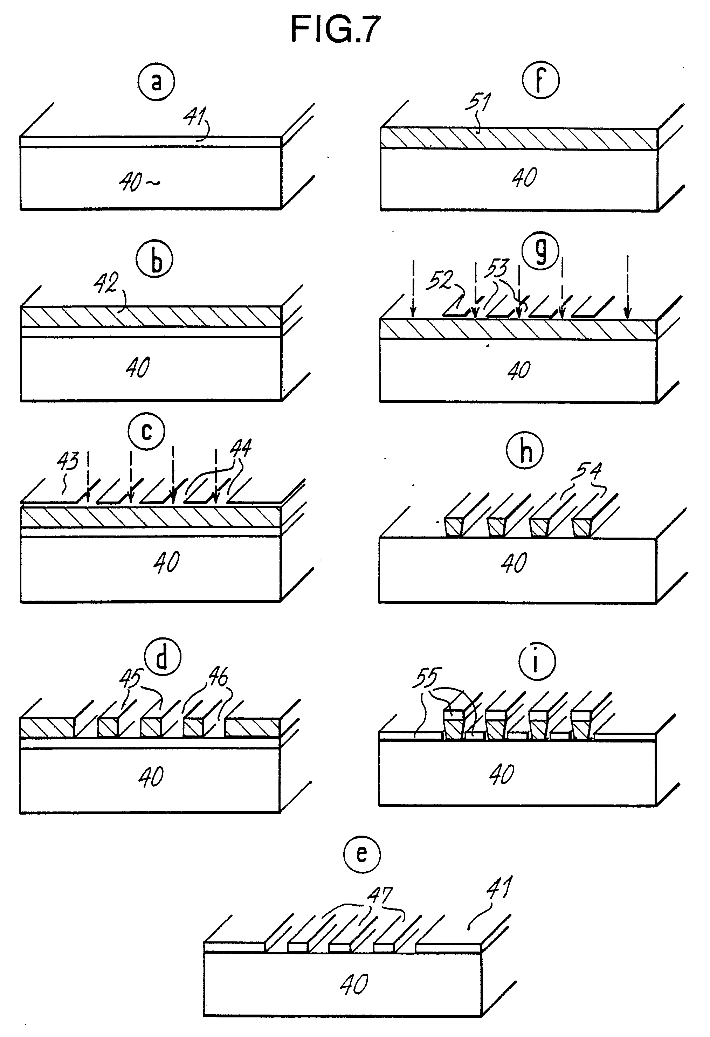

La structure qui vient d'être décrite peut être constituée de matériaux à fort coefficient électro-optique ($LiNbO_3$, InP, GaAs, etc...). On peut alors disposer des électrodes au voisinage de la jonction, pour obtenir une modulation de la lumière. Le phénomène mis en œuvre est un peu différent de celui des modulateurs classiques. Il peut être expliqué à l'aide de la figure 3, déjà décrite et de la figure 6 qui représente un réseau d'indice 24 inséré entre deux électrodes 30, 31 ; la première est reliée à la masse et la seconde est portée à une tension V réglable. Le champ électrique appliqué au matériau électro-optique constituant le réseau modifie les indices $n_1$ et $n_2$ des différentes zones du réseau dont l'écart $\Delta n$, et par conséquent le paramètre x évoqué plus haut. Si la tension V appliquée est modulée entre deux valeurs $V_1$ et $V_2$, cela équivaut à une variation de x entre deux valeurs $x_1$ et $x_2$. Si l'on se reporte à la figure 3, on voit que l'énergie diffractée dans les ordres + 1 et — 1 varie alors entre deux valeurs $E_1$ et $E_2$. On obtient ainsi une modulation de la lumière dans les deux guides de sortie 21 et 22 (et naturellement dans le guide 23).

A titre d'exemple, les quelques valeurs numériques suivantes peuvent être indiquées :

répartition de l'énergie : 34 % dans les deux guides extrêmes 21 et 22 et 8 % dans le guide central 23, avec x = 1,9, ce qui correspond sensiblement au point M de la figure 3,

répartition égale dans les trois guides de sortie (point N) avec x de l'ordre de 1,4 à 1,5,

avec un guide de Ti : $LiNbO_3$ de largeur 8 μm, $\theta = 30°$ à la longueur d'onde de 1,55 μm ; le pas p du réseau est de 1,4 μm et la longueur L est égale à 78 μm ; le paramètre x vaut 1,9 ;

pour $\theta = 45°$, $\lambda = 1,55$ μm, p = 1,0 μm et L = 60 μm, le paramètre x est égal à 1,45.

En ce qui concerne la fabrication du dispositif qui vient d'être décrit, on peut utiliser des techniques connues telles que celles qui sont décrites dans l'article de PUN E.Y.B. et YI-YAN Alfredo intitulé « Fabrication of Periodic Waveguides by Ion Exchange » publié dans la revue « Applied Physics Letters », 38, 9, p. 873-874 (mai 1981) ainsi que dans l'article de PUN E.Y.B., WONG K.K., ANDONOVIC I., LAYBOURN P.J.R. et DE LA RUE R.M. intitulé « Efficient Wave Guide Bragg-Deflection Grating on LiNbO₃ » publié dans la revue Electronics Letters 18, 17, p. 740-742 (août 1982).

Les figures 7 à 10 montrent quelques étapes de procédés de fabrication possibles.

Sur la figure 7, tout d'abord, on dépose sur un substrat 40, une couche 41 de matériau dopant (figure a) puis une couche 42 de photorésine (figure b) laquelle est insolée (figure c) à travers un masque 43 percé d'ouvertures 44. Après développement, il subsiste des bandes 45 de résine séparant des ouvertures 46 (figure d). A travers ces ouvertures une attaque chimique ou ionique de la couche 41 est effectuée. Ensuite on retire les bandes de résine 45, ce qui laisse subsister des bandes de dopant 47 sur le substrat 40 (figure e).

Un autre procédé qui mène au même résultat consiste à effectuer sur le substrat 40 un dépôt d'une couche 51 de photorésine (figure f), à insoler cette couche à travers un masque 52 percé d'ouvertures 53 (figure g). Après développement, il subsiste des bandes 54 de résine (figure h). On effectue ensuite un dépôt d'une couche métallique 55 (figure i) puis, par enlèvement (« lift-off »), on fait disparaître les parties de cette couche métallique qui recouvrent les bandes de résine. On obtient alors le motif de la figure e.

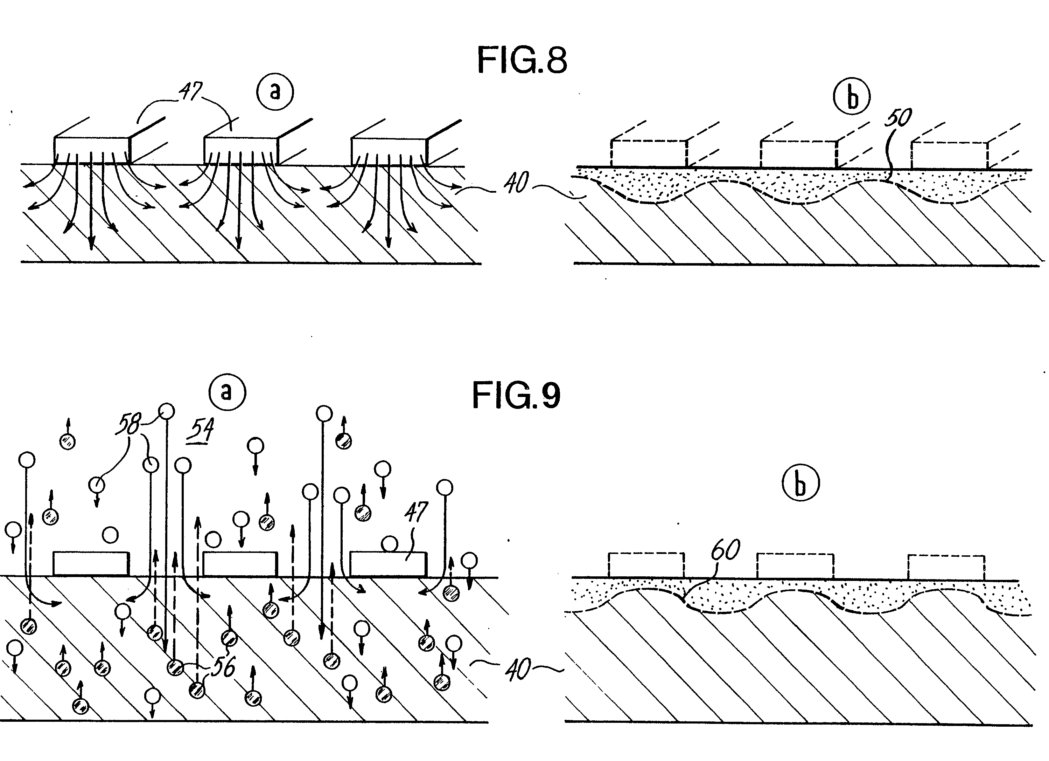

Ayant obtenu ce motif soit par une voie, soit par l'autre, le procédé se poursuit comme indiqué sur la figure 8. Les bandes 47 sont alors constituées d'un matériau dopant, lequel diffuse dans le substrat 40. Cette diffusion est essentiellement transversale mais comporte également une partie latérale. Cette diffusion est schématisée par les flèches de la figure a. Après diffusion on obtient une couche de guidage 50 de dopage continu tel qu'illustré sur la figure b.

Au lieu d'utiliser la diffusion d'un dopant, on peut avoir recours à un procédé d'échange ionique, comme indiqué sur la figure 9. Les zones 47 sont alors constituées par un masque qui recouvre le substrat. Mise au contact avec une solution ionique 54, cette structure est le siège d'un échange ionique. Par exemple des ions Na⁺ (56) provenant du substrat de verre s'échangent avec des ions Ag⁺⁺ (58) provenant de la solution. Cet échange s'effectue préférentiellement selon une direction transverse, mais également selon une direction latérale (flèches de la partie a). Dès que l'échange ionique est terminé, le masque 47 est retiré. La couche de guidage 60 obtenue finalement est encore contenue et est représentée sur la partie b. Elle est analogue à celle de la figure 8b, si ce n'est que l'effet obtenu est maintenant maximum en regard des ouvertures du masque alors que, dans le cas précédent, la diffusion y était minimum. Dans les deux cas, la couche de guidage (50 ou 60), sur son substrat 40, voit son indice varier périodiquement.

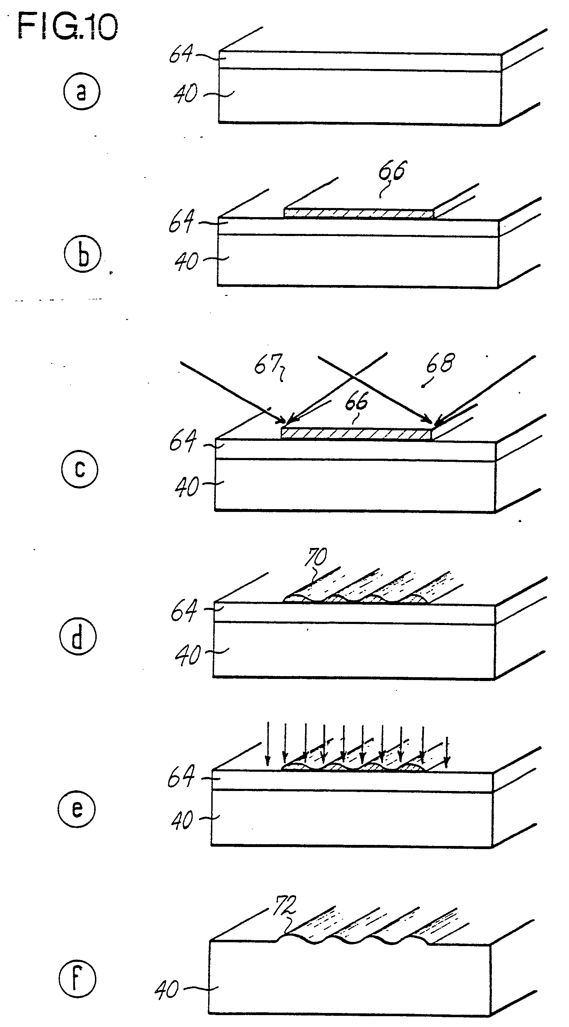

La figure 10 illustre un dernier procédé de fabrication. Sur un substrat 40 revêtu d'une couche de guidage 64 (figure a) on dépose une couche 66 de photorésine (figure b). Celle-ci est insolée par deux rayonnements cohérents 67 et 68 qui interfèrent sur la photorésine (figure c). Les franges d'interférence ainsi obtenues permettent, après développement, d'obtenir une couche de photorésine 70 d'épaisseur périodique (figure d). Par usinage ionique, à travers cette couche (figure e), on obtient une couche de guidage ondulée 72 surmontant le substrat 40.

## Revendications

1. Structure de guide optique comprenant un guide d'entrée monomode (20) ayant une certaine direction (De), deux guides de sortie monomode (21, 22) ayant des directions ($Ds_1$, $Ds_2$) inclinées de manière symétrique par rapport à la direction (De) du guide d'entrée, une zone évasée de jonction (25) entre le guide d'entrée et les guides de sortie, et un réseau de diffraction (24) ayant des traits parallèles au guide d'entrée, caractérisée en ce que les traits du réseau de diffraction (24) s'étendent en partie dans le guide d'entrée (20) et en partie dans la zone évasée, ce réseau ayant un pas de l'ordre du micromètre qui définit seulement deux directions de diffraction d'ordres différents de zéro, respectivement + 1 et — 1, ce pas étant choisi pour que ces deux directions de diffraction coïncident avec les directions des deux premiers guides de sortie, ce réseau ayant par ailleurs une faible résolution en longueur d'onde par un nombre de traits inférieur à une dizaine.

2. Structure selon la revendication 1, caractérisée en ce qu'elle comprend un troisième guide de sortie monomode (23) situé entre les deux premiers et ayant même direction que celle du guide d'entrée.

3. Structure selon la revendication 1, caractérisée en ce que le réseau est encadré par deux électrodes (30, 31) portées à des potentiels différents.

4. Structure selon la revendication 1, caractérisée en ce que le réseau (24) est un réseau d'indice.

5. Structure selon la revendication 1, caractérisée en ce que le réseau (24) est obtenu par ondulation de l'épaisseur de la couche de guidage.

## Claims

1. Optical guidance structure comprising a monomode input guide (20) having a particular direction (De), two monomode output guides (21, 22) having directions ($Ds_1$, $Ds_2$) symmetrically

inclined with respect to direction (De) of the input guide, a widened junction zone (25) between the input guide and the output guides and a diffraction grating with lines parallel to the input guide characterized in that the lines of the diffraction grating (24) partly extend into the input guide (20) and partly into the widened zone, said grating having a spacing of about 1 micrometre whichonly defines two diffraction directions of different zero orders, respectively + 1 and — 1, said spacing being chosen so that these two diffraction gratings coincide with the directions of the first two output guides, said grating also having a small wavelength resolution by a number of lines less than ten.

2. Structure according to claim 1, characterized in that it comprises a third monomode output guide (23) located between the first two guides and having the same direction as that of the input guide.

3. Structure according to claim 1, characterized in that the grating is framed by two electrodes (30, 31) raised to different potentials.

4. Structure according to claim 1, characterized in that the grating (24) in an index grating.

5. Structure according to claim 1, characterized in that the grating (24) is obtained by undulation of the thickness of the guidance layer.

**Patentansprüche**

1. Optische Wellenleiterstruktur umfassend einen Eintypeneintrittsleiter (20), der eine gewisse Richtung (De) aufweist, zwei Eintypenaustrittsleiter (21, 22), die symmetrisch in bezug auf die Richtung (De) des Eintrittsleityers geneigte Richtungen (Ds₁, Ds₂) aufweisen, einen erweiterten Verbindungsbereich (25) zwischen dem Eintrittsleiter und den Austrittsleitern und ein Beugungsgitter (24), welches zu dem Eintrittsleiter parallele Linien aufweist, dadurch gekennzeichnet, daß sich die Linien des Beugungsgitters (24) zum Teil in den Eintrittsleiter (20) und zum Teil in den erweiterten Bereich erstrecken, dieses Beugungsgitter eine Giterkonstante in der Mikrometergrößenordnung aufweist, welche nur zwei Beugungsrichtungen von Null verschiedener Ordnung festlegt, nämlich + 1 und — 1, diese Gitterkonstante so gewählt ist, daß diese zwei Beugungsrichtungen mit den Richtungen der zwei ersten Austrittsleiter zusammenfallen, dieses Gitter übrigens durch eine Linienanzahl von weniger als 10 eine geringe Wellenlängenauflösung aufweist.

2. Struktur nach Anspruch 1, dadurch gekennzeichnet, daß sie einen dritten Eintypenaustrittsleiter (23) umfaßt, der sich zwischen den zwei ersten befindet und dieselbe Richtung wie diejenige des Eintrittsleiters aufweist.

3. Struktur nach Anspruch 1, dadurch gekennzeichnet, daß das Gitter von zwei Elektroden (30, 31) eingerahmt ist, die an unterschiedlichen Potentialen liegen.

4. Struktur nach Anspruch 1, dadurch gekennzeichnet, daß das Gitter (24) ein Brechnungsindexgitter ist.

5. Struktur nach Anspruch 1, dadurch gekennzeichnet, daß das Gitter (24) durch Wellung der Dicke der Leiterschicht erhalten wird.

# FIG.1

# FIG.2

# FIG.3

$J_0^2(x)$

$J_1^2(x)$

$M$

$N$

$P$

$E_1$

$E_2$

$x_1$ $x_2$

$x$

# FIG. 6

30

24

31

$V$

# FIG.4

# FIG.5

# FIG.7

(a)

41

40~

(b)

42

40

(c)

43    44

40

(d)

45    46

40

(e)

47    41

40

(f)

51

40

(g)

52    53

40

(h)

54

40

(i)

55

40

4

# FIG.8

# FIG.9

0 126 686